(19) **Europäisches Patentamt / European Patent Office / Office européen des brevets**

(11) **EP 4 443 631 A1**

(12) **EUROPEAN PATENT APPLICATION**
published in accordance with Art. 153(4) EPC

(43) Date of publication:
**09.10.2024 Bulletin 2024/41**

(21) Application number: **22921708.8**

(22) Date of filing: **20.12.2022**

(51) International Patent Classification (IPC):
***H01M 50/451*** *(2021.01)*

(52) Cooperative Patent Classification (CPC):
**H01M 50/40; H01M 50/451; Y02E 60/10**

(86) International application number:
**PCT/CN2022/140419**

(87) International publication number:
**WO 2023/138287 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.01.2022 CN 202210082907**

(71) Applicant: **Huawei Technologies Co., Ltd.**
**Shenzhen, Guangdong 518129 (CN)**

(72) Inventors:
- **YANG, Dongfang**
  **Shenzhen, Guangdong 518129 (CN)**
- **LI, Zhixian**
  **Shenzhen, Guangdong 518129 (CN)**
- **SUN, Zemeng**
  **Shenzhen, Guangdong 518129 (CN)**
- **XIE, Fengchao**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **COMPOSITE SEPARATOR, ELECTROCHEMICAL APPARATUS, AND TERMINAL DEVICE**

(57) This application relates to the field of battery separator technologies, and provides a composite separator, an electrochemical apparatus, and a terminal device. The composite separator includes a base separator and a film covering a surface of the base separator, where the film is a porous film. The film includes a first material region, a second material region, and a third material region, and the second material region and the third material region are respectively disposed on two sides of the first material region, and both are connected to the first material region. A material of the first material region includes a polymer. Both a material of the second material region and a material of the third material region include inorganic particles, where a mass percentage of the inorganic particles in the second material region is 90% or more, and/or a mass percentage of the inorganic particles in the third material region is 90% or more. The entire composite separator provided in this application has a high rupture temperature, and edge regions at two ends of the separator have a low heat shrinkage rate and high puncture resistance.

FIG. 4

**Description**

This application claims priority to Chinese Patent Application No. 202210082907.1, filed with the China National Intellectual Property Administration on January 24, 2022 and entitled "COMPOSITE SEPARATOR, ELECTROCHEMICAL APPARATUS, AND TERMINAL DEVICE", which is incorporated herein by reference in its entirety.

**TECHNICAL FIELD**

This application relates to the field of battery separator technologies, and in particular, to a composite separator, an electrochemical apparatus, and a terminal device.

**BACKGROUND**

With development of electric vehicles, intelligent terminals, and electronic mobile apparatuses, lithium-ion batteries become one of the most important components in electronic product and new energy vehicle industries. As a separation component, a separator is used to separate a cathode and an anode of a battery. As one of five main materials of the lithium-ion batteries, the separator plays an important role in battery safety. The most commonly used separator is a polyethylene separator. A heat shrinkage rate of the separator is generally MD > 10% (130°C/1 h) and TD > 10% (130°C/1 h). In addition, a rupture temperature of the separator is generally < 160°C. Therefore, when the battery works at a high temperature, the separator melts and shrinks seriously by heat. The cathode and the anode of the battery are in direct contact due to damage to the separator. This causes a serious short circuit inside the battery. As a result, thermal runaway occurs in the battery.

To improve thermal stability of the separator, a surface of a base separator is usually coated with a coating. The coating is usually an inorganic ceramic layer (silicon oxide, aluminum oxide, magnesium oxide, and the like), an organic polymer adhesive coating (PVDF, PMMA, and the like), or an organic high-temperature-resistant polymer coating (PI, an aramid fiber layer, and the like). The inorganic ceramic layer and the organic high-temperature-resistant polymer coating are used to improve thermal stability of the base separator, meet reliability and safety requirements of related products in high-temperature application scenarios, and prevent batteries from being burned or even exploded. The organic polymer adhesive coating is used to improve interface bonding with an electrode plate, improve overall hardness and strength of the battery, prevent a cell from being deformed, and ensure reliability and safety of the cell. However, when a polymer material, for example, an aramid fiber, is at a high temperature, a motion unit of a polymer chain changes from a previous bond length and a bond angle to a chain segment, and motion of a molecular chain accelerates. As a result, aramid molecules are curled, causing a high heat shrinkage rate. A heat shrinkage rate of the coating reaches 6% (130°C/1 h) or even higher. Consequently, for the battery with the organic polymer adhesive coating formed on the surface of the base separator, when the separator is heated, the separator easily shrinks, causing an internal short circuit at both ends of the battery. Severe heating of the internal short circuit causes large-scale thermal runaway of the battery. In addition, puncture strength of a polymer is low, and burrs on the electrode plates at the head and tail of the battery are very likely to puncture the separator. This causes a micro short circuit inside the battery, and causes self-discharge inside the battery.

**SUMMARY**

An objective of this application is to provide a composite separator and a preparation method thereof, and an electrochemical apparatus and a terminal device that include the composite separator, to resolve a problem that in an existing battery separator, a heat shrinkage rate of an aramid fiber layer on a surface of a base separator is high, and puncture strength is low, which increases a risk of a short circuit and a micro short circuit at both ends of a battery, and affects battery performance.

To achieve the objective of this application, the following technical solutions are used in this application.

A first aspect of this application provides a composite separator, including a base separator and a film covering a surface of the base separator, where the film is a porous film.

The film includes a first material region, a second material region, and a third material region, and the second material region and the third material are respectively disposed on two sides of the first material region, and both are connected to the first material region.

A material of the first material region includes a polymer, content of the polymer is 30% or more of total mass of the material of the first material region, and a rupture temperature of the first material region is greater than 260°C.

Both a material of the second material region and a material of the third material region include inorganic particles.

Assuming that total mass of the second material region is 100%, a mass percentage of the inorganic particles is 90% or more, a rupture temperature of the second material region is greater than 160°C, and a heat shrinkage rate of the second material region is less than 3%@130°C 1 h.

In addition/alternatively, assuming that total mass of the third material region is 100%, a mass percentage of the inorganic particles is 90% or more, a rupture temperature of the third material region is greater than 160°C, and a heat shrinkage rate of the third material region is less than 3%@130°C 1 h.

According to the composite separator provided in this application, the film is disposed on the surface of the base separator, and different material layers are formed in different regions of the separator. Specifically, the first material region, namely, a middle section region, of the film in this application includes content greater than 30% or more, and a rupture temperature is greater than 260°C. In addition, materials of the second material region and the third material region, namely, regions at two ends of the film, include inorganic particles. The inorganic particles help reduce a heat shrinkage rate of a corresponding region, and improve hardness of the corresponding region. When a mass percentage of the inorganic particles in the second material region and/or the third material region is 90% or more, a heat shrinkage rate of a corresponding region (the second material region and/or the third material region) is less than 3%@130°C 1 h. In addition, rupture temperatures of both the second material region and the third material region are greater than 160°C, so that the entire film on the surface of the base separator has a good rupture temperature. When the separator with this feature is used in a battery, the entire battery has good heat resistance performance. In addition, because a heat shrinkage rate of the separator at both ends of the battery is reduced, a risk of an internal short circuit at both ends of the battery can be reduced. Especially, when a mass percentage of the inorganic particles in the surface film of the separator at both ends of the battery is 90% or more, the risk of the internal short circuit at both ends of the battery can be significantly reduced, thereby preventing large-scale thermal runaway of the battery. In addition, the separator at at least one of both ends of the battery has good puncture strength, thereby reducing a risk of puncturing the film by residual burrs on electrode plates at the head and tail of the battery, and a probability of a micro short circuit at both ends of the battery. Especially, when the mass percentage of the inorganic particles in the surface film of the separator at both ends of the battery is 90% or more, a risk of self-discharge in the battery can be significantly reduced. In conclusion, for the battery that includes the separator, the separator at both ends can still maintain integrity and strength even under a high temperature condition, thereby reducing a risk of a short circuit of the battery caused by heat shrinkage, heat rupture, or burrs and foreign objects on the separator in a mechanical abuse or heat abuse (for example, a high temperature) scenario of the battery, and improving safety performance of the battery.

In a possible implementation of the composite separator in this application, a median particle size, that is, D50, of the inorganic particles is less than 0.5 $\mu$m. In this case, there is a large quantity of small particles in the inorganic particles in the second material region and the third material region and a small overall granularity, and a corresponding film region has high denseness. This helps improve puncture resistance of a film layer in the corresponding region. In some possible implementations, the median particle size, that is, D50, of the inorganic particles is 0.1 $\mu$m to 0.3 $\mu$m. In this case, there is a large quantity of small particles in the inorganic particles in the second material region and the third material region and high uniformity, and a formed film layer has higher denseness, high puncture resistance, and a low heat shrinkage rate.

In a possible implementation of the composite separator in this application, in the inorganic particles included in the second material region, small particles with a particle size of 0.05 $\mu$m to 0.3 $\mu$m account for 80% or more of total mass of the inorganic particles.

In a possible implementation of the composite separator in this application, in the inorganic particles included in the third material region, small particles with a particle size of 0.05 $\mu$m to 0.3 $\mu$m account for 80% or more of total mass of the inorganic particles.

In a possible implementation of the composite separator in this application, in the inorganic particles included in the second material region, small particles with a particle size of 0.05 $\mu$m to 0.3 $\mu$m account for 80% or more of the total mass of the inorganic particles; and in the inorganic particles included in the third material region, small particles with a particle size of 0.05 $\mu$m to 0.3 $\mu$m account for 80% or more of the total mass of the inorganic particles.

When the inorganic particles in the second material region and/or the inorganic particles in the third material region meet the foregoing case, the inorganic particles have a small granularity and high uniformity. This helps form a dense film layer with high flatness and high pencil hardness, and thus obtain the second material region and/or the third material region with high denseness and flatness and good puncture resistance. When the separator is used in the battery, the second material region and the third material region are disposed at both ends of the battery, so that a heat shrinkage rate of at least one of both ends of the battery can be effectively reduced, and puncture resistance of the second material region and the third material region can be improved, thereby improving electrochemical performance and safety performance of the battery.

In a possible implementation of the composite separator in this application, content of the inorganic particles in the second material region and the third material region gradually increases in a direction from being close to the first material region to being away from the first material region. In this case, the inorganic particles have higher content closer to an end of the separator, and have highest content at an edge. Therefore, a risk of film curling at the edge is lowest, and a heat shrinkage rate of the entire film can be reduced by minimizing a low heat shrinkage rate of an edge region. In addition, in positions that are of the second material region and the third material region and that are close to the first material region, content of the inorganic particles is properly reduced, and an appropriate quantity of other materials such as a heat-resistant polymer is introduced, so that a rupture temperature at the position can be further improved, and a risk of a short circuit of the battery caused by heat rupture of the separator in a heat abuse (for example, a high temperature) scenario can be reduced.

In a possible implementation of the composite separator in this application, the material of the second material region further includes a first bonding agent that withstands a high temperature of 160°C, and mass of the first bonding agent is 0% to 5% of total mass of the material of the second material region.

In a possible implementation of the composite separator in this application, the material of the third material region further includes a second bonding agent that withstands a high temperature of 160°C, and mass of the second bonding agent is 0% to 5% of total mass of the material of the third material region.

In a possible implementation of the composite separator in this application, the material of the second material region further includes a first bonding agent that withstands a high temperature of 160°C, and mass of the first bonding agent is 0% to 5% of total mass of the material of the second material region; and the material of the third material region further includes a second bonding agent that withstands a high temperature of 160°C, and mass of the second bonding agent is 0% to 5% of total mass of the material of the third material region.

In the foregoing three cases, a part of the bonding agent that withstands the high temperature of 160°C is selectively added to the materials of the second material region and/or the third material region, to improve bonding firmness of the materials of the second material region and/or the third material region on the surface of the base separator, especially to improve bonding firmness of the materials on the surface of the base separator in a high-temperature condition, thereby improving stability of the materials at a high temperature of the battery. Moreover, because of a high heat-resistant temperature of the bonding agent, a rupture temperature of this region is increased. This can improve high-temperature-resistant performance of the entire separator.

In a possible implementation of the composite separator in this application, the first bonding agent and the second bonding agent are separately independently selected from one or more of polyvinylidene fluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyethylene oxide, cellulose acetate, cellulose acetate butyrate, cellulose acetate propionate, polyvinylpyrrolidone, polyvinyl acetate, polyvinylether, polymethyl methacrylate, polytetrafluoroethylene, organic silicon adhesive, phenolic resin adhesive, urea-formaldehyde resin adhesive, epoxy resin adhesive, methacrylic acid-methyl methacrylate-maleic anhydride terpolymer, methacrylic acid-methyl methacrylate-vinylcarbazole terpolymer, and polyimide derivative. The first bonding agent and the second bonding agent have good bonding performance, and can bond and fasten the inorganic particles in the second material region and the third material region on the surface of the base separator. In addition, the bonding agent has high high-temperature-resistant performance, so that the bonding agent can deal with a high temperature environment when the separator is used in the battery, to maintain integrity and uniformity of the film layer when the battery is subject to heat abuse (for example, a high temperature).

In a possible implementation of the composite separator in this application, the material of the second material region further includes a polymer whose rupture temperature is 260°C or higher, and mass of the polymer is 0% to 5% of total mass of the material of the second material region.

In a possible implementation of the composite separator in this application, the material of the third material region further includes a polymer whose rupture temperature is 260°C or higher, and mass of the polymer is 0% to 5% of total mass of the material of the third material region.

In a possible implementation of the composite separator in this application, the material of the second material region further includes a polymer whose rupture temperature is 260°C or higher, and mass of the polymer is 0% to 5% of total mass of the material of the second material region; and the material of the third material region further includes a polymer whose rupture temperature is 260°C or higher, and mass of the polymer is 0% to 5% of total mass of the material of the third material region.

In the foregoing three cases, a part of the polymer whose rupture temperature is 260°C or higher is added to the materials of the second material region and the third material region, to further improve the rupture temperatures of the second material region and the third material region. However, when the content of the polymer in the second material region and the third material region is excessively high, shrinkage rates and denseness of the second material region and the third material region are affected, thereby affecting puncture resistance. Therefore, a mass percentage of the polymer in the second material region and the third material region is 0% to 5%.

In a possible implementation of the composite separator in this application, the material of the first material region further includes the inorganic particles and/or a bonding agent that withstands 160°C. The bonding agent that withstands 160°C is added to the first material region, so that bonding performance of the polymer on the surface of the base separator can be improved. The inorganic particles are added to the first material region, so that heat shrinkage efficiency of the first material region can be improved. Particularly, when the material of the first material region includes the inorganic particles, the bonding agent may further improve bonding performance between the inorganic particles and the polymer.

In a possible implementation of the composite separator in this application, a thickness of the film is 1 μm to 5 μm. The thicknesses of the films differentiatedly distinguished by two different materials are set within this range, puncture resistance and low shrinkage rate can be improved, and good energy density can be ensured.

In a possible implementation of the composite separator in this application, a direction from the first material region to the third material region is set as a width direction of the composite separator, a width of the second material region is 0.2% to 20% of a total width of the composite separator, and a width of the third material region is 0.2% to 20% of the total width of the composite separator. In this case, 0.2% to 20% of a region at each of edges of two ends of the separator in the width direction is protected by a material layer that mainly includes the inorganic particles. A heat shrinkage rate of the region is reduced, and puncture performance is improved. When the composite separator and a battery electrode plate are used to make a roll core, edges of the cathode and anode plates fall on the region, thereby reducing impact of burrs generated when the cathode and anode plates are striped on the battery, and reducing a probability of self-discharge of the battery.

In a possible implementation of the composite separator in this application, a width of the second material region is 0.2 mm or more, and a width of the third material region is 0.2 mm or more. In this case, 0.2 mm or more of a region at each of the edges of the two ends of the separator in the width direction is protected by a material layer that mainly includes the inorganic particles. This can protect a region in which an internal short circuit or a micro short circuit occurs at both ends of a conventional battery, effectively prevent a micro short circuit or an internal short circuit from occurring at both ends of the battery including the separator, and improve safety performance and electrochemical performance of the battery.

In a possible implementation of the composite separator in this application, pencil hardness of the second material region and pencil hardness of the third material region are greater than pencil hardness of the first material region, and the pencil hardness of the second material region and/or the pencil hardness of the third material region are/is greater than or equal to 3H. In this case, puncture resistance of the second material region and the third material region is improved. Especially, when both the pencil hardness of the second material region and the pencil hardness of the third material region are greater than or equal to 3H, puncture resistance of the second material region and the third material region is significantly improved, so that the separators at both ends of the battery that includes the separator are not easily punctured by burrs and foreign objects, thereby reducing a risk of a consequent short circuit of the battery and improving safety performance of the battery.

In a possible implementation of the composite separator in this application, the inorganic particles are selected from at least one of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and a mesoporous molecular sieve. The foregoing inorganic particles have good heat resistance performance. After the film is formed, the film has an excellent low heat shrinkage rate and high puncture resistance. As a main material at two ends of the battery separator, the inorganic particles are advantageous to solve a problem of a micro short circuit or an internal short circuit at the two ends of the battery separator.

In a possible implementation of the composite separator in this application, the polymer is selected from at least one of polyvinylidene fluoride, vinylidene difluoride-hexafluoropropylene copolymer, polystyrene, aramid fiber, polyacrylate or modified polyacrylate, polyester, polyarylate, polyacrylonitrile, aromatic polyamide, polyimide, polyethersulfone, polysulfone, polyether ketone, polyetherimide, and polybenzimidazole. The polymer has flame retardancy, and the flame retardancy makes the formed film have a high rupture temperature, for example, the rupture temperature is > 260°C.

According to the implementations provided in embodiments of this application, for weak mechanical abuse and heat abuse of the battery, a heat shrinkage rate of the separator is reduced, and puncture resistance performance is improved, thereby improving mechanical abuse performance and heat abuse performance of the separator.

In a possible implementation of the composite separator in this application, a main material of the first material region is an aramid fiber, and content of the aramid fiber is 30% or more of the total mass of the material of the first material region; and both the material of the second material region and the material of the third material region include inorganic particles and a high-temperature-resistant bonding agent that withstands 160°C or higher, content of the inorganic particles in the second material region is 90% or more of the total mass of the material of the second material region, and content of the inorganic particles in the third material region is 90% or more of the total mass of the material of the third material region.

In the inorganic particles in the second material region, small particles with a particle size of 0.05 μm to 0.3 μm account for 90% or more of the total mass of the inorganic particles; and in the inorganic particles in the third material region, small particles with a particle size of 0.05 μm to 0.3 μm account for 90% or more of the total mass of the inorganic particles.

In this case, the composite separator has a rupture temperature greater than 200°C, and a rupture temperature at both ends of the separator is greater than 260°C, so that the battery including the separator does not melt when being subject to heat abuse and mechanical abuse. This can effectively isolate the cathode and the anode of the battery, avoid a severe internal short circuit caused by direct contact between the cathode and the anode, and improve battery safety. Moreover, when the second material region and the third material region of the composite separator are disposed at two ends of the battery in a TD direction, because the inorganic particles at the edge of the separator in the TD direction have high content and a small granularity, a film layer formed in this case has high denseness, a low heat shrinkage rate, and strong puncture resistance performance. This can effectively reduce shrinkage of the edge of the separator in a battery reliability test (for example, dropping or rolling), mechanical abuse, or heat abuse, reduce a probability of a short circuit of the battery, and reduce a probability of thermal runaway of the battery in the foregoing scenario. In addition, the inorganic particles in the second material region and the third material region are bonded by using a high-temperature-resistant bonding agent, and the bonding agent still maintains a bonding characteristic at a high temperature, which helps improve a rupture temperature and bonding firmness of the separator. When the composite separator and a battery electrode plate are used to make a roll core, edges of the cathode and anode plates fall on the region, thereby reducing impact of burrs generated when the cathode and anode plates are striped on the battery, and reducing a probability of self-discharge of the battery.

This application further provides a preparation method of a composite separator, including the following steps:

coating inorganic particles mixture slurry at two edges of a surface of a base separator through continuous coating or intermittent coating, and coat polymer slurry on a remaining region of the surface; and

after drying processing, forming a porous film on a surface of the obtained base separator, to obtain the composite separator through preparation.

A second aspect of this application provides an electrochemical apparatus, including a cathode plate, an anode plate, an electrolyte, and a separator disposed between the cathode plate and the anode plate. The separator is the composite separator according to the first aspect of this application, and the second material region and the third material region in the composite separator are respectively located at edges of two ends of the electrochemical apparatus in a TD direction.

The electrochemical apparatus provided in this application includes the foregoing composite separator. A heat shrinkage rate of the composite separator at an edge in the TD direction is reduced, and puncture resistance performance is good. The electrochemical apparatus including the composite separator can effectively reduce shrinkage of the edge of the separator in a battery reliability test (for example, dropping or rolling), mechanical abuse, or heat abuse, reduce a probability of a short circuit of the battery, and reduce a probability of thermal runaway of the battery in the foregoing scenario. When the composite separator and an electrode plate are used to make a roll core, because edges of the cathode and anode plates fall on the region, impact of burrs generated when the cathode and anode plates are striped on the battery is reduced, and a probability of self-discharge of the electrochemical apparatus is reduced.

In a possible implementation of the electrochemical apparatus in this application, at least one polymer layer is disposed on at least one surface of the composite separator. The polymer layer can improve interfacial bonding between the composite separator and the electrode plate, improve overall hardness and strength of the electrochemical apparatus, and prevent a cell from being deformed.

In a possible implementation of the electrochemical apparatus in this application, the polymer layer is a material layer formed by at least one of PVDF, PMMA, dopamine, CMC, SBR, PTFE, and PVA. In a possible implementation of the electrochemical apparatus in this application, the polymer layer is a polymer laminate formed by at least two of PVDF, PMMA, dopamine, CMC, SBR, PTFE, and PVA, and a polymer in the polymer laminate may be one or more of the foregoing polymers. The foregoing polymer material can improve bonding strength between the composite separator and the electrode plate provided in the first aspect, and maintain structure stability of the electrochemical apparatus.

In a possible implementation of the electrochemical apparatus in this application, the electrochemical apparatus is a lithium secondary battery, a potassium secondary battery, a sodium secondary battery, a zinc secondary battery, a magnesium secondary battery, or an aluminum secondary battery.

In a possible implementation of the electrochemical apparatus in this application, a structure of the electrochemical apparatus is one or more of a winding structure and a laminating structure.

In a possible implementation of the electrochemical apparatus in this application, the electrochemical apparatus further includes a packaging housing, and one or more electrochemical apparatus units are packaged in the packaging housing.

A third aspect of this application provides a terminal device, including a housing, and an electronic component and an electrochemical apparatus that are accommodated in the housing. The electrochemical apparatus is the electrochemical apparatus provided in the first aspect of this application, and the electrochemical apparatus is configured to supply power to the electronic component.

In a possible implementation of the terminal device in this application, the terminal device is a computer, a mobile phone, a tablet, a wearable product, or an electric vehicle.

**BRIEF DESCRIPTION OF DRAWINGS**

FIG. 1 is a schematic diagram of an exploded structure of a mobile phone according to an embodiment of this application;

FIG. 2 is a schematic diagram of a structure of an electrochemical apparatus according to an embodiment of this application;

FIG. 3 is a schematic diagram of partition of a surface film of a composite separator according to an embodiment of this application;

FIG. 4 is a schematic diagram of a longitudinal section of a composite separator according to an embodiment of this application;

FIG. 5 is a schematic diagram of a morphology structure of adding a bonding agent to an inorganic particle according to an embodiment of this application;

FIG. 6 is a schematic diagram of an electrochemical apparatus using a composite separator according to an embodiment of this application; and

FIG. 7 is a flowchart of a preparation process of a composite separator according to an embodiment of this application.

**DESCRIPTION OF EMBODIMENTS**

To make the technical problems to be resolved, technical solutions, and beneficial effects in this application clearer, the following further describes this application in detail with reference to embodiments. It should be understood that the specific embodiments described herein are merely used to explain this application but are not intended to limit this application.

The term "and/or" in this application describes an association relationship for describing associated objects, and indicates that three relationships may exist. For example, A and/or B may indicate the following cases: Only A exists, both A and B exist, and only B exists. A and B may be singular or plural. The character "/" generally indicates an "or" relationship between the associated objects.

In this application, at least one means one or more, and a plurality of means two or more. In addition, "at least one of the following items (pieces)" or a similar expression thereof indicates any combination of these items, including a single item (piece) or any combination of a plurality of items (pieces). For example, "at least one (piece) of a, b, or c" or "at least one (piece) of a, b, and c" may all represent the following: a, b, c, a-b (in other words, a and b), a-c, b-c, or a-b-c, where a, b, and c may be singular or plural.

It should be understood that sequence numbers of the foregoing processes do not mean execution sequences in various embodiments of this application. Some or all of the steps may be performed in parallel or in sequence. The execution sequences of the processes should be determined based on functions and internal logic of the processes, and should not be construed as any limitation on the implementation processes of embodiments of this application.

The terms used in the embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

The weight of the related component mentioned in this specification of embodiments of this application may not only indicate specific content of each component, but also indicate a proportional relationship between weights of the components. Therefore, scale-up or scale-down of the content of the related component according to this specification of embodiments of this application falls within the scope disclosed in this specification of embodiments of this application. Specifically, the mass described in this specification of embodiments of this application may be a well-known mass unit such as $\mu$g, mg, g, or kg in the chemical field.

The terms "first" and "second"are merely intended for a purpose of description, are used to distinguish between purposes such as substances, and shall not be understood as an indication or implication of relative importance or implicit indication of the number of indicated technical features. For example, without departing from the scope of embodiments of this application, a first XX may also be referred to as a second XX. Similarly, a second XX may also be referred to as a first XX. Therefore, a feature limited by "first" or "second" may explicitly or implicitly include one or more features.

The term "MD" is an abbreviation of "Machine direction", representing a machine direction.

The term "TD" is an abbreviation of "Transverse direction", representing a direction that is perpendicular to the machine direction.

The term "SOC" is an abbreviation of "State of charge", representing a state of charge.

The term "PVDF" is an abbreviation of "polyvinylidene fluoride", representing polyvinylidene fluoride.

The term "PMMA" is an abbreviation of "polymethyl methacrylate", representing polymethyl methacrylate.

The term "SBR" is an abbreviation of "Styrene-butadiene", representing styrene-butadiene rubber.

The term "NMP" is an abbreviation of "N-Methyl-2-pyrrolidone", representing N-methyl-2-pyrrolidone, also referred to as 1-methyl-2-pyrrolidone.

The term "CNTs" is an abbreviation of "Carbon nanotubes", representing carbon nanotubes.

The term "CMC" is an abbreviation of "Carboxymethyl Cellulose", representing carboxymethyl cellulose.

The term "SP" is an abbreviation of "Super P", representing conductive carbon black.

The term "PTFE" is an abbreviation of "Polytetrafluoroethylene", representing polytetrafluoroethylene.

The term "PVA" is an abbreviation of "Polyvinyl alcohol", representing polyvinyl alcohol.

The term "PI" is an abbreviation of "Polyimide", representing polyimide.

The term "battery" is expressed as "Battery" in English, and means an apparatus that generates currents through flowing of electrons based on an electric potential difference generated by different electric potentials of two electrodes. The apparatus may convert chemical energy into electric energy.

The term "cathode" is represented as "Cathode" in English. In a primary battery, a positive electrode is an electrode from which a current flows or an electrode with a high potential, and the positive electrode obtains electrons to perform reduction. In an electrolytic pool, a cathode is an electrode connected to a positive electrode of a power supply, and the cathode loses electrons to perform oxidation.

The term "anode" is represented as "Anode" in English. In a primary battery, a negative electrode is an electrode into which a current flows or an electrode with a low potential, and the negative electrode loses electrons to perform oxidation. In an electrolytic pool, an anode is an electrode connected to a negative electrode of a power supply, and the anode obtains electrons to perform reduction.

The term "electrolyte" is expressed as "Electrolyte" in English, and means a medium that provides ion exchange between a cathode and an anode of a battery.

The term "separator" is expressed as "Separator" in English, and means a medium used to separate a cathode from an anode in a cell and prevent a short circuit caused by direct contact between the cathode and the anode. Basic properties of the separator are porosity (which may provide a channel for ion transmission) and electronic insulation (which prevents electricity leakage).

The term "base separator" is expressed as "base separator" in English, and means a microporous film part in the separator. The base separator can provide porosity and insulation, and can be used independently as a separator in a cell.

The term "heat abuse" is expressed as "Heat abuse" in English, and means an abuse test of a cell in a heat (or high temperature) aspect, for example, a hot box test (where the cell is baked at a high temperature $\geq 130°C$).

The term "mechanical abuse" is expressed as "Mechanical abuse" in English, and may mean abuse of a cell in a mechanical aspect. A mechanical abuse-related test may be performed on the cell by using a nail penetration test, an impact test, or the like.

The term "puncture strength" is expressed as "Puncture strength" in English, and may mean a force required for a spherical steel needle with a diameter of 1.0 mm to puncture a separator at a speed of $300 \pm 10$ mm/min.

The term "heat shrinkage" is expressed as "heat shrinkage" in English, representing a size change rate of a separator in a machine/transverse direction (where the machine direction MD is a direction along a long edge of the separator, and the transverse direction TD is perpendicular to MD, and is a direction along a short edge of the separator) before and after heating. A method for testing the heat shrinkage rate may include: A size of the separator in the machine/transverse direction (MD/TD) is measured; the separator with a specific size in the machine/transverse (MD/TD) direction is placed in an incubator; the incubator is heated to a specific temperature; and a size of the separator after heating in the machine/transverse (MD/TD) direction is measured.

The term "rupture temperature" is expressed as "Rupture temperature" in English, representing a temperature when a separator melts to a specific extent and ruptures, causing a partial or complete short circuit.

The term "D50" is a particle size corresponding to a sample when an accumulated particle size distribution percentage reaches 50%. The physical meaning of D50 is as follows: Particles whose particle sizes are greaterthan or equal to D50 account for 50%, and particles whose particle sizes are less than D50 account for 50%. D50 is also referred to as a median diameter or a median particle size.

The term "pencil hardness" is expressed as "pencil hardness" in English. The pencil hardness, also referred to as costing-film pencil hardness testing, is a test method and measurement system for calibrating costing-film hardness. According to the industry standard, the pencil hardness is classified into 13 levels, from the hardest 6H to 5H, 4H, 3H, 2H, and H in descending order, then to moderate HB, and then to the softest 6B from B and 2B. H represents hardness (hardness), and B represents black (black). The hardness is in descending order from 6H to 6B.

It should be understood that, in embodiments of this application, "n%@130°C 1 h" indicates that a heat shrinkage rate of a coating is n% when the coating is heated for one hour at a temperature of 130°C. For example, "3%@130°C 1 h" indicates that a composite separator is heated for one hour at 130°C, and a heat shrinkage rate of the composite separator is less than 3%.

An embodiment of this application provides a terminal device. The terminal device may be a mobile terminal, or may be an immobile terminal. For example, the terminal device may be a mobile or an immobile terminal having an electrochemical apparatus, for example, a mobile phone, a tablet, a computer, a notebook computer, an ultra-mobile personal computer (UMPC), a handheld computer, a walkie-talkie, a netbook, a POS terminal, a personal digital assistant (PDA), an event data recorder, a wearable device, a virtual reality device, a wireless USB flash drive, a Bluetooth speaker/headset, or a factory-installed vehicle component.

In this embodiment of this application, the terminal device includes a housing, and an electronic component and an electrochemical apparatus that are accommodated in the housing. In this embodiment of this application, the electrochemical apparatus is configured to supply power to the electronic component, and may be a battery. For example, the electrochemical apparatus may be a lithium secondary battery, a potassium secondary battery, a sodium secondary battery, a zinc secondary battery, a magnesium secondary battery, or an aluminum secondary battery.

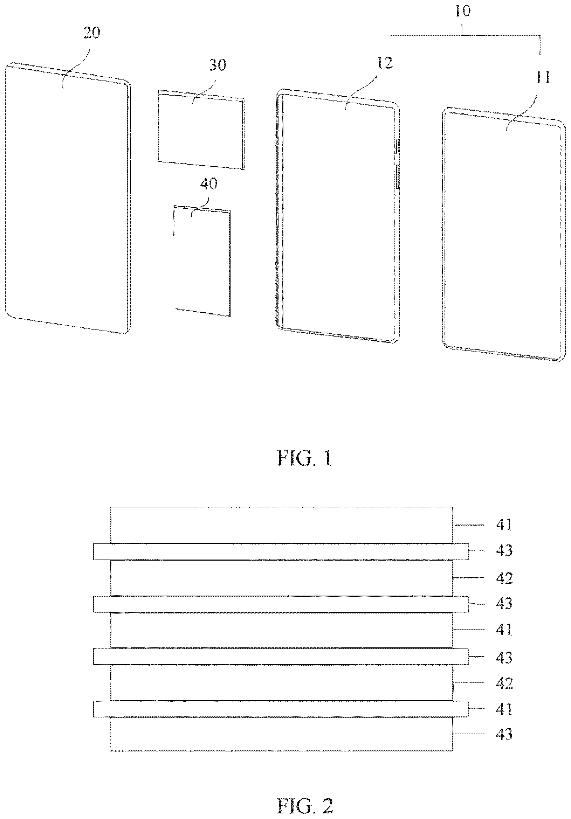

A mobile phone is used as an example. Refer to a schematic diagram of a structure in FIG. 1. The mobile phone may include: a mobile phone housing 10 and a display 20, where the mobile phone housing 10 and the mobile phone housing 10 include a rear cover 11; and a circuit board 30 and a battery 40, where the circuit board 30 and the battery 40 are disposed between the mobile phone housing 10 and the display 20. The mobile phone housing 10 may include a middle frame 12. The circuit board 30 and the battery 40 may be disposed on the middle frame 20. For example, the circuit board 30 and the battery 40 are disposed on a surface that is of the middle frame 12 and that faces the rear cover 11. Alternatively, the circuit board 30 and the battery 40 may be disposed on a surface that is of the middle frame 12 and that faces the display 20.

In an embodiment of this application, the electrochemical apparatus includes a cathode plate, an anode plate, an electrolyte, and a separator disposed between the cathode plate and the anode plate. As shown in FIG. 2, the cathode plate 41, the anode plate 42, and the separator 43 are superposed in a sequence of the cathode plate 41, the separator 43, the anode plate 42, and the separator 43, to form a laminated unit. A structure of the electrochemical apparatus is one or more of a winding structure and a laminating structure. When the structure of the electrochemical apparatus is a winding structure, a laminated unit is wound to form a winding cell structure. When the structure of the electrochemical apparatus is a laminating structure, a plurality of laminated units are laminated on separators to form a laminating cell structure. To be specific, the cathode plate and the anode plate are always separated by using the separator, to prevent a short circuit between the cathode and the anode.

It should be understood that, to avoid a short circuit between the cathode plate and the anode plate in the electrochemical apparatus, a width of the separator may be increased, so that the width extends at two ends of the separator, and exceeds widths of the cathode plate and the anode plate, as shown in FIG. 2.

After an electrolyte is introduced into the cell structure formed by the laminated unit, an electrochemical apparatus unit may be formed, where the electrolyte is disposed between the cathode plate and the anode plate. In embodiments of this application, the electrolyte in the electrochemical apparatus may be a solid electrolyte or a liquid electrolyte.

In a possible implementation, the electrochemical apparatus further includes a packaging housing, and one or more electrochemical apparatus units are packaged in the packaging housing.

Specifically, in the electrochemical apparatus, types of the cathode plate and the anode plate may be selected based on a type of the electrochemical apparatus. Details are not described herein again. There is no strict limitation on disposing of the cathode plate and the anode plate. In some embodiments, the cathode plate includes a cathode current collector and a cathode active material layer that is bound to a surface of at least one side of the cathode current collector. In some other embodiments, the cathode plate may be an integrated electrode plate, that is, the cathode plate is not separately provided with the cathode current collector, but an electrode plate including a cathode active material is directly used as the cathode plate. Similarly, in some embodiments, the anode plate includes an anode current collector and an anode active material layer that is bound to a surface of at least one side of the anode current collector. In some other embodiments, the anode plate may be an integrated electrode plate, that is, the anode plate is not separately provided with the anode current collector, but an electrode plate including an anode active material is directly used as the anode plate.

The separator usually includes a base separator. An organic polymer adhesive coating on a surface of the base separator can effectively improve a rupture temperature. However, the organic polymer adhesive coating is prone to heat shrinkage when being heated, and heat shrinkage at an edge of the separator is most significant. The heat shrinkage of the organic polymer adhesive coating makes the base separator lose protection of a heat-resistant material, resulting in an internal short circuit at both ends of the battery. Severe heating of the internal short circuit causes large-scale thermal runaway of the battery. In addition, puncture strength of the organic polymer adhesive coating is low, and residual burrs on the electrode plates at the head and tail of the battery easily puncture the organic polymer adhesive coating. This causes a micro short circuit at both ends of the battery, and causes self-discharge in the battery.

Inorganic ceramic particles have high heat resistance and a low heat shrinkage rate. The inorganic ceramic particles are bonded to the surface of the base separator by using a high-temperature-resistant bonding agent. A coating formed in this way can improve heat resistance performance of the separator, effectively improve heat shrinkage performance of the separator, and reduce a high-temperature heat shrinkage rate of the separator to be less than 4%@130°C 1 h. However, a rupture temperature of the coating is low, and is usually lower than 160°C. This cannot meet a high temperature resistance requirement of the battery. It is found through research that a small amount, such as 0.5 wt% to 10 wt%, of inorganic ceramic nanoparticles are added to a polymer material such as an aramid fiber, and the ceramic particles play a rigid support role in a polymer material chain, which can alleviate a heat shrinkage rate of the polymer coating to some extent. However, the method still cannot effectively solve the problem of a high heat shrinkage rate of the polymer material such as the aramid fiber.

In view of this, an embodiment of this application provides a new separator. The separator is a composite separator, and includes a base separator and a porous film on a surface of the base separator. It should be understood that, when the composite separator is used for superposing a battery with a cathode plate and an anode plate, the composite separator has no front or rear side. To be specific, in the composite separator, the base separator may be in contact with the cathode plate (in this case, the porous film is in contact with the anode plate), or may be in contact with the anode plate (in this case, the porous film is in contact with the cathode plate).

In this embodiment of this application, the base separator is a porous film, and a porous structure of the film can provide a transmission channel for ion transmission in the battery, so that the base separator serves as a main functional layer of the composite separator, and plays a role of separating a cathode from an anode in a cell, to prevent a short circuit caused by direct contact between the cathode and the anode.

In this embodiment of this application, a material included in the base separator is mainly a polymer. In some implementations, the material included in the base separator is selected from a polymer whose obturator temperature is 150 ± 15°C. In this case, the base separator has a low obturator temperature. When a battery temperature rises to the temperature, the polymer melts, and a micropore of the base separator is closed, so that an ion transmission loop of the battery is cut off, the battery is inactive, and battery safety is ensured.

In a possible implementation, a material included in the base separator is selected from at least one of polyolefin and polyolefin derivatives. Because the polyolefin has a porous characteristic, the polyolefin is also referred to as a porous polyolefin, and can provide a channel for ion transmission. In addition, the polyolefin has electronic insulation, and can effectively prevent electricity leakage of the battery as a separator. In addition, an obturator temperature of the polymer layer formed by polyolefin is about 140°C. When a temperature of the battery that includes the polyolefin layer in the separator reaches the temperature, the micropore of the base separator is closed, so that the ion transmission loop is cut off, the battery is inactive, and battery safety is ensured. The polyolefin layer has a good mechanical characteristic, so that the separator can meet engineering requirements in laminating and winding processes of the battery.

For example, the material of the base separator includes but is not limited to one or more of polyethylene, polypropylene, poly-1-butene, poly-1-pentene, poly-1-hexene, poly-4-methyl-1-pentene, poly-1-octene, polyvinyl acetate, polymethyl methacrylate, polystyrene, polyvinylidene fluoride, polytetrafluoroethylene, and polymethyl methacrylate.

In some embodiments, the base separator is prepared by using a polyolefin material. In some embodiments, the base separator is made of a composition formed by two or more types of polyolefin. In this embodiment, two or more types of polyolefin may be two or more polyolefin materials of different types. For example, the polyolefin material of the base separator is a composition of polyethylene and polypropylene. Alternatively, two or more types of polyolefin may be two or more polyolefin materials of a same type but different viscosity average molecular weights. For example, the polyolefin material of the base separator is a composition of a plurality of polyethylene of different viscosity average molecular weights.

In some implementations, a thickness of the base separator is 0.2 μm to 20 μm. In this embodiment of this application, a film with high heat resistance is formed on a surface of the polyolefin layer. This improves a rupture temperature and heat shrinkage performance of the base separator. Therefore, the thickness of the base separator provided in this application may be as low as 0.2 μm, and the base separator whose thickness is 0.2 μm to 20 μm can effectively isolate the cathode and the anode of the battery. For example, the thickness of the base separator may be 0.2 μm, 0.5 μm, 0.8 μm, 1.0 μm, 2.0 μm, 3.0 μm, 4.0 μm, 5.0 μm, 6.0 μm, 7.0 μm, 8.0 μm, 9.0 μm, 10.0 μm, 11.0 μm, 12.0 μm, 13.0 μm, 14.0 μm, 15.0 μm, 16.0 μm, 17.0 μm, 18.0 μm, 19.0 μm or 20.0 μm. In some implementations, the thickness of the base separator is 0.5 μm to 17 μm.

In an embodiment of this application, a surface of the base separator is covered with a layer of film, to enhance performance of the separator, for example, improve heat resistance and bonding of the separator. The film has a porous structure, and thus can provide a transmission channel for ion transmission in the battery.

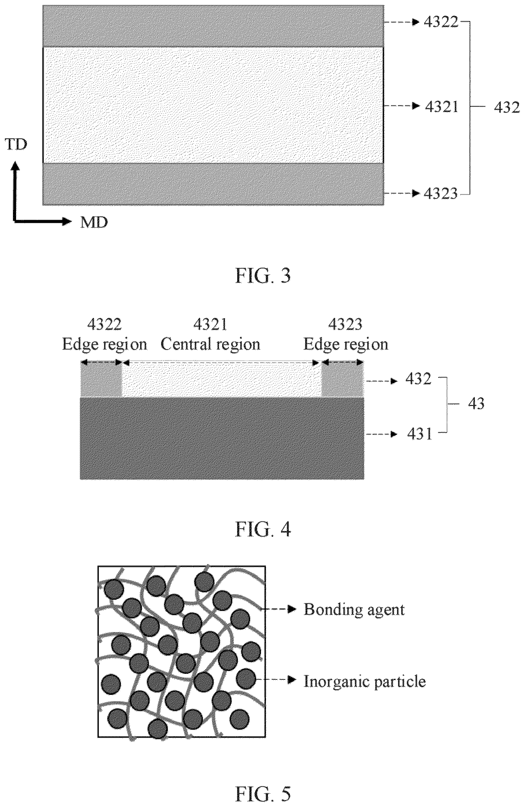

In the composite separator in an embodiment of this application, as shown in FIG. 3, a film 432 is divided into three material regions: a first material region 4321, a second material region 4322, and a third material region 4323, and a location relationship between the three material regions in the composite separator is that the second material region 4322 and the third material region 4323 are respectively located on two sides of the first material region 4321, and both are connected to the first material region 4321. When the composite separator is used for the battery, the first material region 4321 is located in a middle region of the battery in a TD direction, and the second material region 4322 and the third material region 4323 are located in edge regions at two ends of the battery in the TD direction. FIG. 4 is a sectional view of a composite separator including the film in a machine direction. As shown in the figure, a composite separator 43 includes a base separator 431 and the porous film 432 that is bound to a surface of the base separator 431, the second material region 4322 and the third material region 4323 are located in the edge regions at the two ends of the battery in the TD direction, and the first material region 4321 is located between the second material region 4322 and the third material region 4323.

In a possible implementation, the film includes a polymer, inorganic particles, and a bonding agent. Different materials are arranged in the three regions of the film, so that on the premise that the film has good heat resistance performance, puncture resistance performance at both ends of the separator is improved in a use process of the battery, and a heat shrinkage rate of the edge region is reduced. This can better prevent a risk of a micro short circuit or an internal short circuit at both ends of the battery, and improve safety performance of the battery. Specifically, the film is partitioned by arranging different materials, so that a rupture temperature of the first material region of the film is greater than 260°C, both a rupture temperature of the second material region and/or a rupture temperature of the third material region are greater than 160°C, both a heat shrinkage rate of the second material region and/or a heat shrinkage rate of the third material region are less than 3%@130°C 1 h, and pencil hardness of the second material region and the third material region is greater than pencil hardness of the first material region. When the separator with this feature is used in a battery, the entire battery has good heat resistance performance. In addition, because a heat shrinkage rate of the separator at both ends of the battery is reduced, a risk of an internal short circuit at both ends of the battery can be reduced. Especially, when a mass percentage of the inorganic particles in the surface film of the separator at both ends of the battery is 90% or more, the risk of the internal short circuit at both ends of the battery can be significantly reduced, thereby preventing large-scale thermal runaway of the battery. In addition, high pencil strength of the separator at at least one of both ends of the battery imparts good puncture strength to the separator, thereby reducing a risk of puncturing the film by residual burrs on electrode plates at the head and tail of the battery, and a probability of a micro short circuit at both ends of the battery. Especially, when the mass percentage of the inorganic particles in the surface film of the separator at both ends of the battery is 90% or more, a risk of self-discharge in the battery can be significantly reduced.

In this embodiment of this application, the first material region is a main region of the film of the surface of the base separator, and is configured to improve high-temperature-resistant performance of the separator, and in particular, improve a rupture temperature of the separator. In a possible implementation, a main material of the first material region is a polymer. The polymer is selected from a high-temperature-resistant polymer, and content of the polymer is 30% or more of total mass of the material of the first material region. A rupture temperature of the first material region formed in this way is 260°C or higher. In the first material region formed in this way, in a working process of the battery, the separator can withstand a high temperature of 260°C or higher without rupture. This improves high-temperature safety performance of the battery. For example, the content of the polymer may be a specific case such as 30%, 35%, 40%, 45%, 50%, 65%, 70%, 75%, 80%, 85%, 90%, 95%, 98%, 99%, 99.5% or 100% of the total mass of the material of the first material region. In some embodiments, the content of the polymer may be 50% or more of the total mass of the material of the first material region. In a preferred embodiment, the content of the polymer may be 80% or more of the total mass of the material of the first material region.

In some embodiments, the polymer is selected from at least one of polyvinylidene fluoride, vinylidene difluoride-hexafluoropropylene copolymer, polystyrene, aramid fiber, polyacrylate or modified polyacrylate, polyester, polyarylate, polyacrylonitrile, aromatic polyamide, polyimide, polyethersulfone, polysulfone, polyether ketone, polyetherimide, and polybenzimidazole. The polymer has flame retardancy, and the flame retardancy makes the formed first material region have a high rupture temperature, for example, the rupture temperature is > 260°C.

In a possible implementation, the material of the first material region further includes inorganic particles. The inorganic particles are added to the first material region, so that heat shrinkage efficiency of the first material region can be improved. In some embodiments, content of the inorganic particles in the first material region is 20% or less of the total mass of the material of the first material region, so as to reduce a heat shrinkage rate of the first material region to some extent, and reduce impact of the inorganic particles on the rupture temperature of the first material region formed by the polymer.

For example, the inorganic particles are selected from at least one of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and a mesoporous molecular sieve.

In a possible implementation, the material of the first material region further includes a bonding agent that withstands 160°C, to improve bonding of the polymer on the surface of the base separator. Because the high-temperature-resistant bonding agent that can withstand 160°C is selected, it can meet a performance requirement of 160°C high temperature resistance of the composite separator. Particularly, when the material of the first material region includes the inorganic particles, the bonding agent may further improve bonding performance between the inorganic particles and the polymer. In some embodiments, content of the bonding agent in the first material region is 5% or less of the total mass of the material of the first material region, so as to improve bonding of the polymer on the surface of the base separator, and reduce impact of the bonding agent on the rupture temperature of the first material region formed by the polymer.

For example, the bonding agent is selected from one or more of polyvinylidene fluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyethylene oxide, cellulose acetate, cellulose acetate butyrate, cellulose acetate propionate, polyvinylpyrrolidone, polyvinyl acetate, polyvinylether, polymethyl methacrylate, polytetrafluoroethylene, organic silicon adhesive, phenolic resin adhesive, urea-formaldehyde resin adhesive, epoxy resin adhesive, methacrylic acid-methyl methacrylate-maleic anhydride terpolymer, methacrylic acid-methyl methacrylate-vinylcarbazole terpolymer, and polyimide derivative. The bonding agent has good bonding performance, and can improve bonding firmness of the polymer bonding on the surface of the base separator. In addition, the bonding agent has high high-temperature-resistant performance, so that the bonding agent can deal with a high temperature environment when the separator is used in the battery, to maintain integrity and uniformity of the film layer when the battery is subject to heat abuse (for example, a high temperature).

In a possible implementation, the material of the first material region further includes a bonding agent that withstands 160°C and the inorganic particles, the content of the polymer is 30% or more of the total mass of the material of the first material region, and the content of the polymer is preferably 50% or more of the total mass of the material of the first material region. Because a region range of the first material region in the film is large, the content of the polymer in the region is regulated, to impart good heat resistance performance, for example, a rupture temperature, to the entire film.

In this embodiment of this application, the first material region is used to cover all regions on the surface of the base separator except edges at two ends. In a possible implementation, a direction from the first material region to the third material region is set as a direction of a width of the composite separator. Assuming that the width of the composite separator is 1, a width of the first material region is 60% to 99.6%, so that the entire composite separator has good heat resistance performance.

In this embodiment of this application, the second material region and the third material region are disposed in edge regions that are close to two ends of the surface of the base separator, to improve puncture resistance performance of the regions, and reduce heat shrinkage performance. This resolves a problem of a short circuit in the battery because heat shrinkage easily occurs in the region in an application process of the battery, and a problem of a micro short circuit because residual burrs of the electrode plate puncture the separator in the region.

The separator is the composite separator according to the first aspect of this application, and the second material region and the third material region in the composite separator are respectively located at edges of two ends of the electrochemical apparatus in the TD direction.

In this embodiment of this application, both a material of the second material region and a material of the third material region include inorganic particles. The inorganic particles are used to improve puncture resistance of the second material region and the third material region, and reduce a heat shrinkage rate of the regions. In a first possible implementation, a main material of the third material region is inorganic particles, and a mass percentage of the inorganic particles in the second material region is 90% or more. For example, content of the inorganic particles is a specific case such as 90%, 91%, 92%, 93%, 94%, 95%, 96%, 97%, 98% or 99% of total mass of the material of the second material region. In a second possible implementation, a main material of the third material region is inorganic particles, and a mass percentage of the inorganic particles in the third material region is 90% or more. For example, content of the inorganic particles is a specific case such as 90%, 91%, 92%, 93%, 94%, 95%, 96%, 97%, 98% or 99% of total mass of the material of the third material region. In the foregoing two cases, at least one material region in the second material region and the third material region may form a dense film layer that mainly includes inorganic particles. In this way, a heat shrinkage rate of the edge region on at least one side close to the end of the separator can be improved, and the pencil hardness of the film layer can be increased to be ≥ 3H, and puncture resistance of the edge regions at both ends of the separator can be enhanced.

In a third possible implementation, main materials of the second material region and the third material region are inorganic particles, a mass percentage of the inorganic particles in the second material region is 90% or more, and a mass percentage of the inorganic particles in the third material region is 90% or more. For example, content of the inorganic particles is a specific case such as 90%, 91%, 92%, 93%, 94%, 95%, 96%, 97%, 98% or 99% of total mass of the material of the second material region, and content of the inorganic particles is a specific case such as 90%, 91%, 92%, 93%, 94%, 95%, 96%, 97%, 98% or 99% of total mass of the material of the third material region. In this case, the materials in the second material region and the third material region that are respectively located on the two sides of the first material region include inorganic particles whose mass percentage is 90% or more. Inorganic particles of high content increase denseness of the film layer. This not only improves a heat shrinkage rate of the edge regions close to the ends of the separator, but also increases pencil hardness of the film layer to be $\geq$ 3H, to enhance puncture resistance of the edge regions at both ends of the separator. Therefore, in the battery including the separator, even in a high temperature condition, the separator at both ends can still maintain integrity and strength of the separator, thereby reducing a risk of a short circuit of the battery caused by heat shrinkage, heat rupture, or burrs and foreign objects on the separator in a mechanical abuse or heat abuse (for example, a high temperature) scenario of the battery, and improving safety performance of the battery.

In a possible implementation, the pencil hardness of the second material region and/or the pencil hardness of the third material region are/is greater than or equal to 3H. In this case, puncture resistance of the second material region and the third material region is improved. Especially, when both the pencil hardness of the second material region and the pencil hardness of the third material region are greater than or equal to 3H, puncture resistance of the second material region and the third material region is significantly improved, so that the separators at both ends of the battery that includes the separator are not easily punctured by burrs and foreign objects, thereby reducing a risk of a consequent short circuit of the battery and improving safety performance of the battery. In a possible implementation, the content of the inorganic particles in the second material region is the same as the content of the inorganic particles in the third material region.

In a possible implementation, content of the inorganic particles in the second material region and the third material region gradually increases in a direction from being close to the first material region to being away from the first material region. In this case, the inorganic particles have higher content closer to an end of the separator, and have highest content at an edge. Therefore, a risk of film curling at the edge is lowest, and a heat shrinkage rate of the entire film can be reduced by minimizing a low heat shrinkage rate of an edge region. In addition, in positions that are of the second material region and the third material region and that are close to the first material region, content of the inorganic particles is properly reduced, and an appropriate quantity of other materials such as a heat-resistant polymer is introduced, so that a rupture temperature at the position can be further improved, and a risk of a short circuit of the battery caused by heat rupture of the separator in a heat abuse (for example, a high temperature) scenario can be reduced.

In a possible implementation, the inorganic particles are selected from at least one of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and a mesoporous molecular sieve. The foregoing inorganic particles have good heat resistance performance. After the film is formed, the film has an excellent low heat shrinkage rate and high puncture resistance. As a main material at two ends of the battery separator, the inorganic particles are advantageous to solve a problem of a micro short circuit or an internal short circuit at the two ends of the battery separator.

To improve denseness of the film layer of the second material region and the third material region, the coating on the regions can better exert effects of a low heat shrinkage rate and high puncture resistance. In a possible implementation, a median particle size, that is, D50, of the inorganic particles is less than 0.5 $\mu$m. In this case, there is a large quantity of small particles in the inorganic particles in the second material region and the third material region and a small overall granularity, and a corresponding film region has high denseness. This helps improve puncture resistance of a film layer in the corresponding region.

In some possible implementations, the median particle size, that is, D50, of the inorganic particles is 0.1 $\mu$m to 0.3 $\mu$m. In this case, there is a large quantity of small particles in the inorganic particles in the second material region and the third material region and high uniformity, and a formed film layer has higher denseness, high puncture resistance, and a low heat shrinkage rate.

In the second material region and the third material region, more small-granularity inorganic particles whose particle sizes are less than or equal to 0.3 $\mu$m are more conducive to forming a dense film layer. This help reduce a heat shrinkage rate of the regions, and improve puncture resistance. In a possible implementation, in the inorganic particles in the second material region, small particles with a particle size of 0.05 $\mu$m to 0.3 $\mu$m account for 80% or more of total mass of the inorganic particles. In a possible implementation, in the inorganic particles in the third material region, small particles with a particle size of 0.05 $\mu$m to 0.3 $\mu$m account for 80% or more of total mass of the inorganic particles. In a possible implementation, in the inorganic particles in the second material region, small particles with a particle size of 0.05 $\mu$m to 0.3 $\mu$m account for 80% or more of total mass of the inorganic particles, and in the inorganic particles in the third material region, small particles with a particle size of 0.05 $\mu$m to 0.3 $\mu$m account for 80% or more of total mass of the inorganic particles. When the inorganic particles in the second material region and/or the inorganic particles in the third material region meet the foregoing case, the inorganic particles have a small granularity and high uniformity. This helps form a dense film layer with high flatness and high pencil hardness, and thus obtain the second material region and/or the third material region with high denseness and flatness and good puncture resistance. When the separator is used in the battery, the second material region and the third material region are disposed at both ends of the battery, so that a heat shrinkage rate of at least one of both ends of the battery can be effectively reduced, and puncture resistance of the second material region and the third material region can be improved, thereby improving electrochemical performance and safety performance of the battery.

Because the inorganic particles are solid particles and have poor film forming performance, in this embodiment of this application, a bonding agent is added to the inorganic particles, so that the inorganic particles form a firm coating on the surface of the base separator. In a possible implementation, the material of the second material region includes a first bonding agent that withstands a high temperature of 160°C, and mass of the first bonding agent is 0% to 5% of total mass of the material of the second material region. In a possible implementation, the material of the third material region includes a second bonding agent that withstands a high temperature of 160°C, and mass of the second bonding agent is 0% to 5% of total mass of the material of the third material region. In a possible implementation, the material of the second material region includes a first bonding agent that withstands a high temperature of 160°C, and mass of the first bonding agent is 0% to 5% of total mass of the material of the second material region; and the material of the third material region includes a second bonding agent that withstands a high temperature of 160°C, and mass of the second bonding agent is 0% to 5% of total mass of the material of the third material region. In the foregoing implementation, as shown in FIG. 5, the inorganic particles form a firm structure through bonding of the bonding agent. The second material region and the third material region obtained in this way are firmly bonded on the surface of the base separator, thereby improving stability of the second material region and the third material region in a use process of the battery. Moreover, because of a high heat-resistant temperature of the bonding agent, a rupture temperature of this region is increased. This can improve high-temperature-resistant performance of the entire separator.

For example, the first bonding agent and the second bonding agent are separately independently selected from one or more of polyvinylidene fluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyethylene oxide, cellulose acetate, cellulose acetate butyrate, cellulose acetate propionate, polyvinylpyrrolidone, polyvinyl acetate, polyvinylether, polymethyl methacrylate, polytetrafluoroethylene, organic silicon adhesive, phenolic resin adhesive, urea-formaldehyde resin adhesive, epoxy resin adhesive, methacrylic acid-methyl methacrylate-maleic anhydride terpolymer, methacrylic acid-methyl methacrylate-vinylcarbazole terpolymer, and polyimide derivative. The first bonding agent and the second bonding agent have good bonding performance, and can bond and fasten the inorganic particles in the second material region and the third material region on the surface of the base separator. In addition, the bonding agent has high high-temperature-resistant performance, so that the bonding agent can deal with a high temperature environment when the separator is used in the battery, to maintain integrity and uniformity of the film layer when the battery is subject to heat abuse (for example, a high temperature).

To improve continuity of the second material region and the first material region, and continuity of the third material region and the first material region, in this embodiment of this application, a part of the polymer may be added to the materials of the second material region and/or the third material region. In a possible implementation, the material of the second material region includes a polymer whose rupture temperature is 260°C or higher, and mass of the polymer is 0% to 5% of total mass of the material of the second material region. In a possible implementation, the material of the third material region includes a polymer whose rupture temperature is 260°C or higher, and mass of the polymer is 0% to 5% of total mass of the material of the third material region. In a possible implementation, the material of the second material region includes a polymer whose rupture temperature is 260°C or higher, and mass of the polymer is 0% to 5% of total mass of the material of the second material region; and the material of the third material region includes a polymer whose rupture temperature is 260°C or higher, and mass of the polymer is 0% to 5% of total mass of the material of the third material region.

In the foregoing cases, a part of the polymer whose rupture temperature is 260°C or higher is added to the material of the second material region and/or the material of the third material region, so that the first material region has material transition with the second material region and the third material region, thereby improving film layer continuity of the three regions. Moreover, the polymer is added, so that the rupture temperatures of the second material region and the third material region can be further improved. However, when the content of the polymer in the second material region and the third material region is excessively high, shrinkage rates and denseness of the second material region and the third material region are affected, thereby affecting puncture resistance. Therefore, a mass percentage of the polymer in the second material region and the third material region is 0% to 5%.

In a possible implementation, a direction from the first material region to the third material region is set as a width direction of the composite separator. Assuming that the width of the composite separator is 1, a width of the second material region is 0.2% to 20% of a total width of the composite separator, and a width of the third material region is 0.2% to 20% of the total width of the composite separator. In this case, 0.2% to 20% of a region at each of edges of two ends of the separator in the width direction is protected by a material layer that mainly includes the inorganic particles. A heat shrinkage rate of the region is reduced, and puncture performance is improved. When the composite separator and a battery electrode plate are used to make a roll core, edges of the cathode and anode plates fall on the region, thereby reducing impact of burrs generated when the cathode and anode plates are striped on the battery, and reducing a probability of self-discharge of the battery.

In a possible implementation, the width of the second material region is 0.2 mm or more, and the width of the third material region is 0.2 mm or more. In this case, 0.2 mm or more of a region at each of the edges of the two ends of the separator in the width direction is protected by a material layer that mainly includes the inorganic particles. This can protect a region in which an internal short circuit or a micro short circuit occurs at both ends of a conventional battery, effectively prevent a micro short circuit or an internal short circuit from occurring at both ends of the battery including the separator, and improve safety performance and electrochemical performance of the battery.

In a possible implementation, a thickness of the film is 1 $\mu$m to 5 $\mu$m. The thicknesses of the films differentiatedly distinguished by two different materials are set within this range, puncture resistance and low shrinkage rate can be improved, and good energy density can be ensured. If the thickness of the film is greater than 5 $\mu$m, an advantage of maintaining good energy density of the battery is lost. For example, the thickness of the film may be a specific case such as 1 $\mu$m, 2 $\mu$m, 2.5 $\mu$m, 3 $\mu$m, 3.5 $\mu$m, 4 $\mu$m, 4.5 $\mu$m, or 5 $\mu$m.

In a preferred implementation in this application, a main material of the first material region is an aramid fiber, and content of the aramid fiber is 30% or more of the total mass of the material of the first material region; and both the material of the second material region and the material of the third material region are inorganic particles and a high-temperature-resistant bonding agent that withstands 160°C or higher, content of the inorganic particles in the second material region is 90% or more of the total mass of the material of the second material region, and content of the inorganic particles in the third material region is 90% or more of the total mass of the material of the third material region.

In the inorganic particles in the second material region, small particles with a particle size of 0.05 $\mu$m to 0.3 $\mu$m account for 80% or more of total mass of the inorganic particles, and in the inorganic particles in the third material region, small particles with a particle size of 0.05 $\mu$m to 0.3 $\mu$m account for 80% or more of total mass of the inorganic particles.

In this case, the composite separator has a rupture temperature greater than 200°C, and a rupture temperature at both ends of the separator is greater than 260°C, so that the battery including the separator does not melt when being subject to heat abuse and mechanical abuse. This can effectively isolate the cathode and the anode of the battery, avoid a severe internal short circuit caused by direct contact between the cathode and the anode, and improve battery safety. Moreover, when the second material region and the third material region of the composite separator are disposed at two ends of the battery in a TD direction, because the inorganic particles at the edge of the separator in the TD direction have high content and a small granularity, a film layer formed in this case has high denseness, a low heat shrinkage rate, and strong puncture resistance performance. This can effectively reduce shrinkage of the edge of the separator in a battery reliability test (for example, dropping or rolling), mechanical abuse, or heat abuse, reduce a probability of a short circuit of the battery, and reduce a probability of thermal runaway of the battery in the foregoing scenario. In addition, the inorganic particles in the second material region and the third material region are bonded by using a high-temperature-resistant bonding agent, and the bonding agent still maintains a bonding characteristic at a high temperature, which helps improve a rupture temperature and bonding firmness of the separator. When the composite separator and a battery electrode plate are used to make a roll core, edges of the cathode and anode plates fall on the region, thereby reducing impact of burrs generated when the cathode and anode plates are striped on the battery, and reducing a probability of self-discharge of the battery.

It should be understood that the film provided in this embodiment of this application can be attached to the surface of the base separator through adhering.

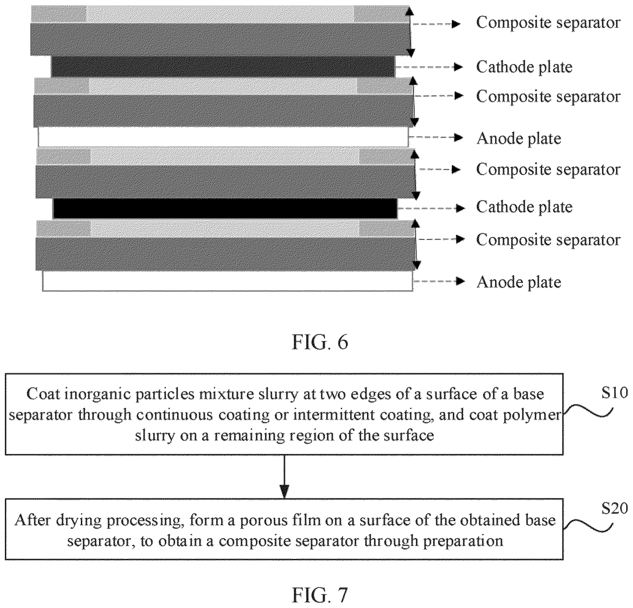

A structure of the cell formed by the composite separator obtained in this embodiment of this application, the cathode plate, and the anode plate may be shown in FIG. 6.

The composite separator provided in this embodiment of this application may be prepared by using the following method.

Correspondingly, an embodiment of this application further provides a preparation method of a composite separator. In the method, a film is formed on a surface of a base separator by using a solution processing method. As shown in FIG. 7, the method specifically includes the following steps.

S10: Coat inorganic particles mixture slurry at two edges of a surface of a base separator through continuous coating or intermittent coating, and coat polymer slurry on a remaining region of the surface.

In this step, the inorganic particle mixture slurry and the polymer slurry are first configured to prepare for forming different materials on surfaces of different regions of the base separator.

In a possible implementation, the inorganic particle mixture slurry is aqueous inorganic particle mixture slurry, and a preparation method of the inorganic particle mixture slurry is as follows:

S111: Add inorganic particles to deionized water, to configure an inorganic particle water mixture.

This step is performed in a reactor. Selection of the inorganic particles is described above. For brevity, details are not described herein again. In some embodiments, the inorganic particles are selected from at least one of silicon dioxide, aluminum oxide, magnesium hydroxide, calcium oxide, boehmite, titanium dioxide, and barium sulfate.

S112: Add a dispersant to the inorganic particle water mixture, and perform mixing and grinding, to obtain an inorganic particle dispersion liquid.

In this step, the dispersant is added, so that dispersion uniformity of the inorganic particles in the deionized water is improved. For example, the dispersant is one or more of nonionic dispersants such as polyvinylpyrrolidone, polyethylene glycol, polyvinyl alcohol, and polyethylene oxide.

In some embodiments, assuming that parts by weight of the inorganic particles are 30 to 50 parts, an amount of the dispersant to be added is 0.1 to 1 part. In this case, the dispersant can fully disperse the inorganic particles whose content is verified, and at the same time, an excessive amount of the dispersant can be avoided from affecting the content of the inorganic particles, thereby affecting a heat shrinkage rate and puncture resistance of the formed coating.

In this step, mixing is used to mix the dispersant and the inorganic particles uniformly, so that the dispersant can fully exert a dispersing effect. In some embodiments, mixing may be implemented through stirring, and a stirring time is 0.5 to 1.5 hours. For example, stirring is performed for 30 min, 40 min, 50 min, 60 min, 70 min, 80 min, 90 min, or the like based on an actual situation.

Large-granularity inorganic particles are scattered through grinding, and small-granularity inorganic particles are formed. The denseness of the coating formed by small-granularity inorganic particles is higher. This helps improve puncture resistance of the coating, and reduce a heat shrinkage rate of the coating. In some embodiments, mixed liquid is ground for 0.5 h to 3 h, so that D50 of the ground inorganic particles is < 0.5 $\mu$m. For example, grinding is performed for 0.5 h, 1 h, 1.5 h, 2 h, 2.5 h, 3 h, or the like based on an actual situation.

In some embodiments, after the dispersant is added to the inorganic particle water mixture, stirring is performed for 0.5 h to 1.5 h, and then grinding is performed for 0.5 h to 3 h, to obtain a uniform inorganic particle dispersion liquid.

S113: Add an auxiliary to the inorganic particle dispersion liquid, and perform stirring for dispersion, to obtain aqueous inorganic particle mixture slurry.

In this step, a proper auxiliary is added, to adjust performance of the dispersion liquid, so that the dispersion liquid has better processability. The auxiliary includes a bonding agent. The bonding agent is added to the inorganic particles, so that the inorganic particle can be bonded to form a stable film layer in a film forming process, and is firmly bonded to the surface of the base separator. For selection of the bonding agent, refer to the foregoing first bonding agent and second bonding agent. For example, the bonding agent is one or more of organic silicon adhesive, phenolic resin adhesive, urea-formaldehyde resin adhesive, temperature-resistant epoxy resin adhesive, methacrylic acid-methyl methacrylate-maleic anhydride terpolymer, methacrylic acid-methyl methacrylate-vinylcarbazole terpolymer, and polyimide derivative.

In some embodiments, the auxiliary further includes but is not limited to an auxiliary that can improve slurry processing performance, for example, a thickening agent and a wetting agent. For example, the thickening agent is at least one of sodium carboxymethyl cellulose, hydroxyethyl cellulose, sodium alginate, hydroxypropyl methylcellulose, and lithium hydroxymethyl cellulose. For example, the wetting agent is one or more of a polyether siloxane copolymer, Tween-90, fluoroalkyl ethoxyol ether, fatty alcohol polyoxyethylene ether, sodium butyl naphthalene sulfonate, sodium isethionate, and sodium dodecyl sulfonate.

It should be understood that the auxiliary added to the inorganic particle dispersion liquid should meet the following condition: After the slurry is coated and dried to form a film, a mass percentage of the inorganic particles in the film layer is 80% or more of total content of the film layer.

For example, assuming that parts by weight of the inorganic particles in the inorganic particle dispersion liquid are 30 to 50 parts, parts by weight of the thickening agent, the bonding agent, and the wetting agent are 0.1 to 1.5 parts of the thickening agent, 2 to 7 parts of the bonding agent, and 0.025 to 0.1 parts of the wetting agent.

After the auxiliary is added to the inorganic particle dispersion liquid, and perform stirring for dispersion for 1 h or more.

In a possible implementation, a preparation method of the polymer slurry includes the following steps.

S121: Add the polymer to an organic solvent, and configure a polymer solution.

This step is performed in a reactor. Selection of the polymer is described above. For brevity, details are not described herein again. In this step, an organic solvent having good dispersion performance for the polymer is selected. For example, the organic solvent is selected from a mixed solvent that includes one or more of N,N-dimethylformamide, N,N-dimethylacetamide, N-methyl-2-pyrrolidone, acetone, and ethanol.

In some embodiments, an amount of the organic solvent to be added meets the following condition: 100 parts of heat-resistant polymer are added to 300 to 900 parts of organic solvents, to obtain a polymer solution with proper viscosity.

In a possible implementation, in this step, the polymer solution is dispersed until the polymer is completely dissolved, to obtain the polymer slurry. The obtained polymer slurry can be directly used for coating and film forming. A manner of dispersion processing includes but is not limited to stirring.

In another possible implementation, the auxiliary may be added to the polymer solution as required, to improve processing performance of the slurry. In some embodiments, the auxiliary includes but is not limited to an auxiliary solvent, a dispersant, an emulsifier, and a bonding agent.

For example, the auxiliary solvent is at least one of sodium benzoate, lithium chloride, calcium chloride, sodium hydroxide, and acetamide. For example, the dispersant is one or a combination of polyethylene oxide, an ethylene-acrylic acid copolymer, and an ethylene-vinyl acetate copolymer. For example, the emulsifier is one or a combination of hexadecyl trimethyl ammonium chloride, stearyl trimethyl ammonium chloride, sodium polyacrylate, potassium polyacrylate, polyacrylamide, dodecyl trimethyl ammonium chloride, an ethylene oxide-epoxy butane copolymer, and an ethylene oxide-propylene oxide-epoxy butane copolymer. The bonding agent may be selected from the bonding agent described above, including but not limited to one or a combination of polyvinylpyrrolidone, vinylpyrrolidone, and an ethylene acetate copolymer.

In some embodiments, the auxiliary includes an auxiliary solvent, a dispersant, an emulsifier, and a bonding agent. Assuming that parts by weight of the polymer are 300 to 900 parts, and an amount of the auxiliary to be added meets: 30 to 50 parts of auxiliary solvent, 5 to 10 parts of dispersant, 5 to 20 parts of emulsifier, and 10 to 20 parts of bonding agent.

Further, after the auxiliary is added, stirring and mixing are performed until the polymer is completely dissolved, to obtain the polymer slurry.

After the inorganic particle mixture slurry and the polymer slurry are configured, the inorganic particle mixture slurry and the polymer slurry are coated on surfaces of different regions of the base separator. Specifically, edge regions at two ends of the surface of the base separator are coated with the inorganic particle mixture slurry, and a middle region, namely, a region other than the edge regions on the surface of the base separator, is coated with the polymer slurry.

In embodiments of this application, for a coating manner, regions coated with a same material may be coated through continuous coating or intermittent coating, and regions coated with different materials may be coated simultaneously, to implement processing integration.

In a possible implementation, the inorganic particle mixture slurry is coated on an edge of the separator in the TD direction through gravure coating in a continuous coating manner or an intermittent coating manner, and a width for single-side coating is 0.1% to 20% of a length of the electrode plate in the TD direction; and the remaining part is coated with the polymer slurry.

S20: After drying processing, form a porous film on a surface of the obtained base separator, to obtain the composite separator through preparation.

The separator coated with the slurry is dried, and coiled to obtain a composite separator of a film formed on the surface of the base separator and having a material region difference in a plane direction.

In some embodiments, when the inorganic particle mixture slurry is aqueous slurry, and the polymer slurry is an organic solution, the coated separator is watered, an oil-based solvent is removed, and then drying and coiling are performed to obtain a finished product.

The electrochemical apparatus provided in this embodiment of this application includes the foregoing composite separator. A heat shrinkage rate of the composite separator at an edge in the TD direction is reduced, and puncture resistance performance is good. The electrochemical apparatus including the composite separator can effectively reduce shrinkage of the edge of the separator in a battery reliability test (for example, dropping or rolling), mechanical abuse, or heat abuse, reduce a probability of a short circuit of the battery, and reduce a probability of thermal runaway of the battery in the foregoing scenario. When the composite separator and an electrode plate are used to make a roll core, because edges of the cathode and anode plates fall on the region, impact of burrs generated when the cathode and anode plates are striped on the battery is reduced, and a probability of self-discharge of the electrochemical apparatus is reduced.

In a possible implementation, at least one polymer layer is disposed on at least one surface of the composite separator. The polymer layer can improve interfacial bonding between the composite separator and the electrode plate, improve overall hardness and strength of the electrochemical apparatus, and prevent a cell from being deformed. In some embodiments, the polymer layer may be activated through heating and shaping. For example, after the polymer is formed on the surface of the composite separator, the polymer is heated under a condition of pressure of 0.1 Mpa to 2.0 Mpa and a temperature of 25°C to 100°C and activated for 20 min to 300 min. In some embodiments, the pressure is 0.5 Mpa to 1.0 Mpa, the temperature is 60°C to 90°C, and an activation time is 60 min to 150 min.

In some embodiments, the polymer layer is a material layer formed by at least one of PVDF, PMMA, dopamine, CMC, SBR, PTFE, and PVA. In some embodiments, the polymer layer is a polymer laminate formed by at least two of PVDF, PMMA, dopamine, CMC, SBR, PTFE, and PVA, and a polymer in the polymer laminate may be one or more of the foregoing polymers. The foregoing polymer material can improve bonding strength between the composite separator and the electrode plate provided in the first aspect, and maintain structure stability of the electrochemical apparatus.

The following provides description with reference to specific embodiments.

**Embodiment 1**

A 506390 pouch cell apparatus with a capacity of 5000 mAh is provided. A size of an electrode plate in a TD direction is 84.0 mm, a length of a separator in the TD direction is 86.5 mm, and a size of a single electrode plate in an MD direction is 60 mm. Preparation of each part is as follows:
Preparation of a cathode plate: The bonding agent PVDF is dissolved in NMP for dispersion, to obtain a PVDF adhesive solution with a mass percentage of 7.0%. Carbon nanotube conductive liquid is added to the PVDF adhesive solution and uniformly dispersed, then an active material lithium cobalt acid is added, and mixed and stirred uniformly to obtain a cathode slurry. The cathode slurry is uniformly coated on two sides of aluminum foil by using a coating device, and is dried in an oven to remove the NMP solvent. A coated electrode plate undergoes processes such as cold pressing, stripping, and tab welding to obtain the cathode plate through preparation. Mass percentages of substances in the cathode are as follows: LCO:CNTs:PVDF is 98.8%:0.02%:1.0%.

Production of an anode plate: Materials of the anode are mixed through kneading. First, even dry blending is performed on artificial graphite and SP. Then, a CMC adhesive solution that has undergone pre-stirring processing is added for kneading and stirring, and the CMC adhesive solution added in this step is 25% of total mass of the CMC. Finally, remaining CMC and deionized water are added for high-speed dispersion to obtain the anode slurry. The sieved anode slurry is uniformly coated on two sides of a copper foil by using a coating device, and an electrode plate dried in an oven undergoes processes such as cold pressing, stripping, and tab welding to obtain the anode plate through preparation. Mass percentages of substances in the anode are as follows: Graphite: SP:CMC:SBR is 96.8%:0.6%:1.2%:1.2%.

Preparation of a separator: The surfaces of the separator are sprayed with a PVDF or PMMA aqueous bonding layer of 0.5 $\mu$m, where the separator is a composite separator, and a preparation method of the composite separator includes the following steps.

(1) Preparation of aluminum oxide slurry

After deionized water and 30 parts of aluminum oxide particles are added to a reactor, 0.5 parts of polyvinylpyrrolidone are added to the reactor, and a mixed system is stirred and ground for 2 h to obtain a uniform aluminum oxide dispersion solution, where D50 of aluminum oxide is 0.3 $\mu$m.

0.5 part of sodium carboxymethyl cellulose, 5 parts of polyvinylidene fluoride, and 0.025 parts of polyether siloxane copolymers are added to the aluminum oxide dispersion solution, and stirred for dispersion for 1 h, to obtain aqueous aluminum oxide slurry.

(2) Preparation of aramid fiber slurry

500 parts of dimethylacetamide solvents (DMAC) are added to the reactor, and then 100 parts of m-phenylenediamine are added, to obtain a mixed system.

30 parts of lithium chloride, 5 parts of polyethylene oxide, 5 parts of hexadecyl trimethyl ammonium chloride, and 10 parts of polyvinylpyrrolidone are added to the foregoing mixed system, and the foregoing mixture is stirred until completely dissolved, to obtain the aramid fiber slurry.

(3) Preparation of a composite separator

In a continuous coating manner or an intermittent coating manner, two edges of the surface of the base separator in the TD direction are coated with aluminum oxide slurry through gravure coating, and a coating width a single edge is 10 mm, and the remaining part is coated with the aramid fiber slurry (heat-resistant polymer slurry). The base separator is a 5.5 $\mu$m polyethylene separator, a porosity is 39.0%, and Gurley permeability is 130s.

The coated battery separator is dried, a porous coating with uneven material distribution is formed on the polyethylene surface, and coiled to obtain the composite separator. In the composite separator obtained in this embodiment, both a coating thickness of the aluminum oxide coating region and a coating thickness of the aramid fiber coating region are 3 $\mu$m.

The foregoing cathode and anode plates and the separator are wound together to form an unpackaged cell. A working voltage range is 3.0 V to 4.45 V Then the unpackaged cell is manufactured into a lithium-ion battery through processes such as packaging, baking, liquid injection, and formation.

Embodiment 2

A 506390 pouch cell apparatus is provided, and a difference from Embodiment 1 lies in preparation of an aramid fiber slurry. Specifically, 500 parts of dimethylacetamide solvent (DMAC) are added to a reactor, and then 100 parts of m-phenylenediamine are added, to obtain a mixed system. 30 parts of lithium chloride, 5 parts of polyethylene oxide, 5 parts of hexadecyl trimethyl ammonium chloride, and 10 parts of polyvinylpyrrolidone are added to the foregoing mixed system, and the foregoing mixture is stirred until completely dissolved, to obtain slurry 1. Then, 80 parts of slurry 1 and 20 parts of aluminum oxide particles are mixed, stirred, and ground for 2 h, to obtain uniform aramid fiber slurry, where D50 of the aluminum oxide particles is 0.3 $\mu$m.

Comparative example 1

A 506390 pouch cell apparatus is provided, and a difference from Embodiment 1 lies in that: In a process of preparing the separator, aluminum oxide slurry is continuously coated on a side of the base separator through gravure coating. The coated battery separator is dried, and a porous coating with uniform material distribution is formed on a polyethylene surface, and coiled to obtain the composite separator.

Comparative example 2

A 506390 pouch cell apparatus is provided, and a difference from Embodiment 1 lies in that: In a process of preparing the separator, aramid fiber slurry is continuously coated on a side of the separator through gravure coating. The coated battery separator is dried, and a porous coating with uniform material distribution is formed on a polyethylene surface, and coiled to obtain the composite separator.

Comparative example 3

A 506390 pouch cell apparatus is provided, and a difference from Embodiment 1 lies in that: In a process of preparing the separator, aramid fiber slurry whose thickness is 3 $\mu$m after drying is continuously coated on one side of the separator through gravure coating, and aluminum oxide slurry whose thickness is 2 $\mu$m after drying is continuously coated on the other side. The coated battery separator is dried, and a porous coating with uniform material distribution is separately formed on surfaces of two sides of polyethylene, and coiled to obtain the composite separator.

A performance test is performed on the 506390 pouch cell apparatus provided in the foregoing embodiments and comparative examples, and test items and test results are shown in Table 1.

**Table 1**

| Item | Embodiment 1 | Embodiment 2 | Comparative example 1 | Comparative example 2 | Comparative example 3 |
|---|---|---|---|---|---|
| Separator thickness ($\mu$m) | 8.5 | 8.5 | 8.5 | 8.5 | 10.5 $\mu$m |
| Battery thickness (mm) | 5 | 5 | 5 | 5 | 5.2 |
| 0.2C energy density (WH/L mm) | 660 | 660 | 660 | 660 | 630 |
| Distribution uniformity of separator materials | Non-uniform; high content of inorganic particles at a head and tail of the separator in a TD direction | Non-uniform; high content of inorganic particles at a head and tail of the separator in a TD direction | Even | Even | Even |
| Separator detection: rupture temperature | Inorganic particle coating: 165°C Polymer coating: 300°C | Inorganic particle coating: 165°C Polymer coating: 260°C | 165°C | 300°C | 300°C |
| Separator test: heat shrinkage rate (130°C 1 h) | Inorganic particle coating: 3% Polymer coating: 6% | Inorganic particle coating: 3% Polymer coating: 5% | 3% | 6% | 3% |

(continued)

| Item | Embodiment 1 | Embodiment 2 | Comparative example 1 | Comparative example 2 | Comparative example 3 |
|---|---|---|---|---|---|
| Electrochemical apparatus test result: 100% SOC shallow puncture of 1/4 battery thickness | 5/5 pass | 5/5 pass | 0/5 pass | 5/5 Pass | 5/5 Pass |
| Electrochemical apparatus test result: 140°C 1 h thermal shock | 5/5 pass | 5/5 pass | 5/5 pass | 0/5 Pass | 5/5 Pass |

It can be learned from Table 1 that in the 506390 pouch cell apparatus provided in embodiments of this application, heat resistance performance of the entire separator is good, and 140°C 1 h thermal shock is good. Particularly, compared with the comparative examples, in the 506390 pouch cell apparatus provided in embodiments of this application, a heat shrinkage rate (130°C 1 h) of the separator at a head and tail of the battery is reduced to 3%, and detection of "100% SOC shallow puncture of 1/4 battery thickness" and "140°C 1 h thermal shock" can be passed. This is because in the 506390 pouch cell apparatus provided in embodiments of this application, high-content inorganic particles are disposed in an edge region of the composite separator in a TD direction, thereby reducing a heat shrinkage rate of the region, and improving puncture resistance performance. Therefore, heat resistance performance of the entire composite separator is enhanced, and battery safety is improved.

In addition, it can be learned from comparison between Embodiment 1 and Comparative example 3 that, in the 506390 pouch cell apparatus provided in embodiments of this application, a thickness of the composite separator is 8.5 $\mu$m, so that thermal resistance and puncture resistance of the 506390 pouch cell apparatus corresponding to the 10.5 $\mu$m separator in Comparative example 3 can be obtained, but the thermal resistance and puncture resistance have little impact on electrochemical performance of the battery. It can be learned that according to the composite separator provided in embodiments of this application, a separator thickness can be reduced, and energy density can be improved.

It should be noted that performance test methods in embodiments of this application are as follows:

(1) Content of inorganic particles and polymers (one of the following methods is used based on a specific situation)

Method 1: An argon ion polishing instrument is used to slice a separator sample, and then SEM-XRD is used to measure content of inorganic particles and polymers on a separator section. Five SEM photos are sequentially taken from one side to the other side in an entire section direction, a ruler is loaded, the content of inorganic particles and polymers is extracted through segmentation, and all results are averaged.

Method 2:

A proper amount of separator is taken, and thermogravimetric analysis/differential thermal analysis is performed in the air to determine quality of each component of the separator. At a high temperature, a sample weight changes, which is displayed as a weight loss step on a TG curve. The content of inorganic particles and polymers in the separator can be quantitatively calculated. A weight loss temperature range of the polymer ranges from 150°C to 600°C. Remaining substances after 600°C are inorganic particles.

(2) Film thickness ($\mu$m)

Manner 1:

a. Sampling: A sample of $1 \times 10^3$ mm$^2$ is cut from the separator (where an area of the sample may be $\geq 1.5 \times 103$ mm$^2$). A quantity of test points is determined based on the separator (generally, the quantity of test points is not less than 10).

b. Test: Testing is performed at a temperature of 23 ± 2°C by using a nanoscale thickness gauge.
c. Data processing: A measured thickness of each test point is obtained and an average value is calculated.

Manner 2:

a. Sampling: For a product whose width is < 200 mm, a test point is determined every 40 mm ± 5 mm in the machine direction (MD). A quantity of test points is not less than 10. The quantity of test points may be determined based on the width of the separator. A distance between a start point for measuring and an edge is not less than 20 mm.
For a product with a width ≥ 200 mm, a test point is determined every 80 mm ± 5 mm in the transverse direction (TD). A quantity of test points is not less than 10. The quantity of test points may be determined based on the width of the separator. A distance between a start point for measuring and an edge is not less than 20 mm.
b. Test: Each test point is tested at a temperature of 23 ± 2°C by using a thickness gauge. A diameter of a measurement surface ranges from 2.5 mm to 10 mm, and a load applied to the measurement surface ranges from 0.5 N to 1.0 N.
c. Data processing: A measured thickness of each test point is obtained and an average value is calculated.

(3) Heat shrinkage rate

a. Sampling: Six samples are randomly cut in the full width. The specific sampling of each sample may include cutting 100 mm in the MD direction of the separator. When the TD direction of the separator is greater than 100 mm, a length of the test sample in the TD direction may be 100 mm; and when the TD direction of a microporous film is less than 100 mm, a length of the test sample in the TD direction may be subject to an actual situation.
b. Test: Labels of the sample in the machine direction and the transverse direction are marked, and sizes of each sample in the machine direction and the transverse direction are measured and recorded; the sample is placed in a jacket layer of a paper clip without folding, wrinkles, or adhesion; the paper jacket (for example, a quantity of layers may be 10) with the sample is smoothly placed in the middle of a constant-temperature oven (for example, a door-opening time is less than 3s); the sample is heated by using an electro-thermal incubator to 130°C for 1 h; and the sample is taken out and cooled to a room temperature, and a length in the machine direction and a length in the transverse direction are measured.
c. Data processing:

A heat shrinkage rate of each sample is calculated as follows:

$$T = (L_0 - L)/L_0 \times 100\%,$$

where
T may be a heat shrinkage rate (%) of the sample, $L_0$ may be a length (mm) of the sample before heating, and L may be a length (mm) of the sample after heating. An arithmetic average value of the heat shrinkage rates of the sample is calculated.

(4) Rupture temperature (°C)

A baking method is used to test a rupture temperature. The separator is placed in a fixture of L * L cm (0 < L ≤ 10 cm) (where L may be a length of the fixture). The fixture is placed in the oven, a temperature is increased at 5°C/min, and whether the separator in the fixture is ruptured is monitored. When the separator changes with the temperature, a temperature at which the separator is ruptured is recorded as the rupture temperature of the separator.

(5) 140°C thermal shock test

a. Sampling: Five pcs of batteries are used for each group.
b. Test: At 25 ± 3°C, the cell is charged to a limiting voltage at a constant current of 0.2C, and then the cell is charged at the constant limiting voltage until the current decreases to 0.025C. The battery is heated from the initial temperature of 25 ± 3°C through convection or by using a cycle hot air oven, where a temperature change rate may be 5 ± 2°C/min; and the temperature keeps 60 min after being increased to 140 ± 2°C.

c. Data processing: The test phenomenon is observed. If no fire or explosion occurs after the temperature rises, it is determined that the test is passed.

(6) Shallow puncture test

a. Sampling: Five pcs of batteries are used for each group.

b. Test: After the battery is fully charged in a standard charging mode, the test is performed within 12 h to 24 h. Then the battery is placed in a 25°C explosion-proof box, and a steel nail is punctured into 1/4 of a center of a cell at a speed of 50 mm/s. A diameter of the steel nail is 2.45 ± 0.06 mm, a length is 45 ± 2.5 mm, and a length of a tip may range from 2 mm to 4.9 mm.

c. Data processing: A test phenomenon is observed. If no fire or explosion occurs on the battery, it is determined that the test is passed.

The foregoing descriptions are merely preferred embodiments of this application, but are not intended to limit this application. Any modification, equivalent replacement, or improvement made without departing from the spirit and principle of this application should fall within the protection scope of this application.

**Claims**

1. A composite separator, comprising a base separator and a film covering a surface of the base separator, wherein the film is a porous film;

    the film comprises a first material region, a second material region, and a third material region, and the second material region and the third material are respectively disposed on two sides of the first material region, and both are connected to the first material region;
    a material of the first material region comprises a polymer, content of the polymer is 30% or more of total mass of the material of the first material region, and a rupture temperature of the first material region is greater than 260°C; and
    both a material of the second material region and a material of the third material region comprise inorganic particles, wherein
    assuming that total mass of the second material region is 100%, a mass percentage of the inorganic particles is 90% or more, a rupture temperature of the second material region is greater than 160°C, and a heat shrinkage rate of the second material region is less than 3%@130°C 1 h; and/or
    assuming that total mass of the third material region is 100%, a mass percentage of the inorganic particles is 90% or more, a rupture temperature of the third material region is greater than 160°C, and a heat shrinkage rate of the third material region is less than 3%@130°C 1 h.

2. The composite separator according to claim 1, wherein a median particle size of the inorganic particles is less than 0.5 μm.

3. The composite separator according to claim 2, wherein in the inorganic particles in the second material region, small particles with a particle size of 0.05 μm to 0.3 μm account for 80% or more of total mass of the inorganic particles; and/or
in the inorganic particles in the third material region, small particles with a particle size of 0.05 μm to 0.3 μm account for 80% or more of total mass of the inorganic particles.

4. The composite separator according to any one of claims 1 to 3, wherein the material of the second material region further comprises a first bonding agent that withstands a high temperature of 160°C, and mass of the first bonding agent is 0% to 5% of total mass of the material of the second material region.

5. The composite separator according to claim 4, wherein the first bonding agent is independently selected from one or more of polyvinylidene fluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyethylene oxide, cellulose acetate, cellulose acetate butyrate, cellulose acetate propionate, polyvinylpyrrolidone, polyvinyl acetate, polyvinylether, polymethyl methacrylate, polytetrafluoroethylene, organic silicon adhesive, phenolic resin adhesive, urea-formaldehyde resin adhesive, epoxy resin adhesive, methacrylic acid-methyl methacrylate-maleic anhydride terpolymer, methacrylic acid-methyl methacrylate-vinylcarbazole terpolymer, and polyimide derivative.

6. The composite separator according to any one of claims 1 to 3, wherein the material of the third material region further comprises a second bonding agent that withstands a high temperature of 160°C, and mass of the second bonding agent is 0% to 5% of total mass of the material of the third material region.

7. The composite separator according to claim 6, wherein the second bonding agent is selected from one or more of polyvinylidene fluoride, polyhexafluoropropylene, a vinylidene fluoride-hexafluoropropylene copolymer, a vinylidene fluoride-trichloroethylene copolymer, a polyethylene-vinyl acetate copolymer, sodium carboxymethyl cellulose, styrene-butadiene rubber, polyacrylic acid, polyacrylic acid salt, polyacrylate, polyacrylonitrile, polyethylene oxide, cellulose acetate, cellulose acetate butyrate, cellulose acetate propionate, polyvinylpyrrolidone, polyvinyl acetate, polyvinylether, polymethyl methacrylate, polytetrafluoroethylene, organic silicon adhesive, phenolic resin adhesive, urea-formaldehyde resin adhesive, epoxy resin adhesive, methacrylic acid-methyl methacrylate-maleic anhydride terpolymer, methacrylic acid-methyl methacrylate-vinylcarbazole terpolymer, and polyimide derivative.

8. The composite separator according to any one of claims 1 to 3, wherein the material of the second material region further comprises a polymer whose rupture temperature is 260°C or higher, and mass of the polymer is 0% to 5% of total mass of the material of the second material region; and/or
the material of the third material region further comprises a polymer whose rupture temperature is 260°C or higher, and mass of the polymer is 0% to 5% of total mass of the material of the third material region.

9. The composite separator according to any one of claims 1 to 3, wherein the material of the first material region further comprises a bonding agent that withstands 160°C and/or the inorganic particles, and the content of the polymer is 30% or more of the total mass of the material of the first material region.

10. The composite separator according to any one of claims 1 to 9, wherein a thickness of the film is 1 μm to 5 μm.

11. The composite separator according to any one of claims 1 to 9, wherein a direction from the first material region to the third material region is set as a width direction of the composite separator, a width of the second material region is 0.2% to 20% of a total width of the composite separator, and a width of the third material region is 0.2% to 20% of the total width of the composite separator.

12. The composite separator according to claim 11, wherein the width of the second material region is 0.2 mm or more, and the width of the third material region is 0.2 mm or more.

13. The composite separator according to any one of claims 1 to 9, wherein pencil hardness of the second material region and pencil hardness of the third material region are greater than pencil hardness of the first material region, and the pencil hardness of the second material region and/or the pencil hardness of the third material region are/is greater than or equal to 3H.

14. The composite separator according to any one of claims 1 to 9, wherein the inorganic particles are selected from at least one of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and a mesoporous molecular sieve; and/or
the polymer is selected from at least one of polyvinylidene fluoride, vinylidene difluoride-hexafluoropropylene copolymer, polystyrene, aramid fiber, polyacrylate or modified polyacrylate, polyester, polyarylate, polyacrylonitrile, aromatic polyamide, polyimide, polyethersulfone, polysulfone, polyether ketone, polyetherimide, and polybenzimidazole.

15. The composite separator according to any one of claims 1 to 14, wherein a main material of the first material region is an aramid fiber, and content of the aramid fiber is 30% or more of the total mass of the material of the first material region; and both the material of the second material region and the material of the third material region comprise inorganic particles and a high-temperature-resistant bonding agent that withstands 160°C or higher, content of the inorganic particles in the second material region is 90% or more of the total mass of the material of the second material region, and content of the inorganic particles in the third material region is 90% or more of the total mass of the material of the third material region; and

in the inorganic particles in the second material region, small particles with a particle size of 0.05 $\mu$m to 0.3 $\mu$m account for 90% or more of the total mass of the inorganic particles; and in the inorganic particles in the third material region, small particles with a particle size of 0.05 $\mu$m to 0.3 $\mu$m account for 90% or more of the total mass of the inorganic particles.

16. An electrochemical apparatus, comprising a cathode plate, an anode plate, an electrolyte, and a separator disposed between the cathode plate and the anode plate, wherein the separator is the composite separator according to any one of claims 1 to 15, and the second material region and the third material region in the composite separator are respectively located at edges of two ends of the electrochemical apparatus in a TD direction.

17. A terminal device, comprising a housing and an electronic component and an electrochemical apparatus that are accommodated in the housing, wherein the electrochemical apparatus is the electrochemical apparatus according to claim 16, and the electrochemical apparatus is configured to supply power to the electronic component.

FIG. 1

FIG. 2

FIG. 3

FIG. 4

FIG. 5

Composite separator

Cathode plate

Composite separator

Anode plate

Composite separator

Cathode plate

Composite separator

Anode plate

FIG. 6

| |
|---|
| Coat inorganic particles mixture slurry at two edges of a surface of a base separator through continuous coating or intermittent coating, and coat polymer slurry on a remaining region of the surface |

S10

| |
|---|
| After drying processing, form a porous film on a surface of the obtained base separator, to obtain a composite separator through preparation |

S20

FIG. 7

## INTERNATIONAL SEARCH REPORT

| International application No. |
|---|
| **PCT/CN2022/140419** |

**A.    CLASSIFICATION OF SUBJECT MATTER**

H01M50/451(2021.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 分数, 覆盖, 隔板, 隔膜, 含量, 聚合物, 两侧, 两端, 破膜温度, 热收缩率, 涂层, 涂覆, 无机, 氧化物, 有机物, 粘结剂, separator, inorganic, polymer, layer, coat, content, side, binder, shrink, membrane, temperature

**C.    DOCUMENTS CONSIDERED TO BE RELEVANT**

| Category* | Citation of document, with indication, where appropriate, of the relevant passages | Relevant to claim No. |
|---|---|---|
| Y | CN 108011067 A (DONGGUAN MOFANG NEW ENERGY TECHNOLOGY CO., LTD.) 08 May 2018 (2018-05-08)<br>description, paragraphs 5-21 and 48-75, and figures 1-3 | 1-17 |
| Y | CN 113594631 A (HUAWEI TECHNOLOGIES CO., LTD.) 02 November 2021 (2021-11-02)<br>description, paragraphs 3-43 and 88-103 | 1-17 |
| A | US 2020350546 A1 (LG CHEMICAL LTD.) 05 November 2020 (2020-11-05)<br>entire document | 1-17 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 February 2023** | **24 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/140419**

| Patent document cited in search report | | | Publication date (day/month/year) | Patent family member(s) | | | Publication date (day/month/year) |
|---|---|---|---|---|---|---|---|
| CN | 108011067 | A | 08 May 2018 | CN | 208028134 | U | 30 October 2018 |
| CN | 113594631 | A | 02 November 2021 | None | | | |
| US | 2020350546 | A1 | 05 November 2020 | EP | 3764427 | A1 | 13 January 2021 |
| | | | | EP | 3764427 | A4 | 23 June 2021 |
| | | | | JP | 2021513190 | A | 20 May 2021 |
| | | | | JP | 7142708 | B2 | 27 September 2022 |
| | | | | WO | 2020096310 | A1 | 14 May 2020 |
| | | | | KR | 20200051370 | A | 13 May 2020 |
| | | | | KR | 102385925 | B1 | 11 April 2022 |
| | | | | CN | 111742425 | A | 02 October 2020 |
| | | | | IN | 202017051268 | A | 07 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210082907